# EUROPÄISCHE PATENTSCHRIFT

(11) **EP 0 655 987 B1**
(45) Veröffentlichungstag und Bekanntmachung des Hinweises auf die Patenterteilung: **07.01.1999**
(21) Anmeldenummer: 94920957.1
(22) Anmeldetag: 20.06.1994
(51) Int. Cl.: C02F 3/10

(54) **FÜLLKÖRPERBLOCK**
FILLER BLOCK
BLOC DE REMPLISSAGE

(30) Priorität: 21.06.1993 DE 4320469
(43) Veröffentlichungstag der Anmeldung: 07.06.1995
(73) Patentinhaber: Norddeutsche Seekabelwerke GmbH, 26954 Nordenham (DE)
(72) Erfinder: BASSE, Hartwig, D-26954 Nordenham (DE); BITTNER, Hans-Joachim, D-26919 Brake (DE)
(74) Vertreter: Möller, Friedrich, Dipl.-Ing.
(86) Internationale Anmeldenummer: EP9401996
(87) Internationale Veröffentlichungsnummer: WO9500448

(56) Entgegenhaltungen:
- EP-A- 0 508 223
- DE-A- 1 619 904
- DE-C- 4 001 482
- GB-A- 1 363 416
- US-A- 3 589 518
- KORRESPONDENZ ABWASSER., Bd.35, Nr.1, Januar 1988, AUGUSTIN DE Seite 96 'Envicon-Festbettkörper für die biologische Abwasserreinigung'

## Beschreibung

Die Erfindung betrifft einen Füllkörperblock nach dem Oberbegriff des Patentanspruchs 1.

Derartige Füllkörperblöcke werden zur Bildung von Tropf- oder Tauchtropfkörpern zur biologischen Behandlung von Abwässern oder sonstigen Fluiden verwendet. Dazu sind die Füllkörperblöcke mit einer Biomasse, einem sogenannten biologischen Rasen, besiedelt.

Es ist bekannt (vgl. z.B. EP-A-0 508 223), eine Vielzahl von nebeneinander liegenden Rohrabschnitten mit netzartig strukturierter Mantelfläche zur Bildung von Füllkörperblöcken miteinander zu verbinden. Die Verbindung der Rohrabschnitte erfolgt mittels Spiegelschweißung, indem die Stirnflächen der Rohrabschnitte erwärmt und druckbeaufschlagt werden, so daß Kontaktstellen benachbarter Stirnflächen der Rohrabschnitte miteinander verschmelzen und Verbindungsstellen bilden.

Durch diese Art der Verschweißung werden an den Stirnflächen der Rohrabschnitte Materialanhäufungen gebildet, die den (freien) inneren Querschnitt der Rohrabschnitte verengen. Diese Querschnittsverengungen wiederum erschweren das Durchströmen des Füllkörperblocks in Längsrichtung der Rohrabschnitte, wodurch die Wirksamkeit solcher bekannten Füllkörperblöcke verringert wird.

Der Erfindung liegt die Aufgabe zugrunde, einen einfach herzustellenden Füllkörperblock zu schaffen, der eine hohe Wirksamkeit aufweist.

Erfindungsgemäß wird die Aufgabe durch einen Füllkörperblock mit den Merkmalen des Anspruchs 1 gelöst. Verengungen des freien Querschnitts der Rohrabschnitte und die damit verbundenen Leistungseinbußen solcher Füllkörperblöcke werden hier vermieden durch die mantelseitige Verbindung der Rohrabschnitte, die ein Verschweißen der Stirnflächen überflüssig macht.

Vorzugsweise werden die Rohrabschnitte über Verbindungsstellen nur im Bereich einer Berührungsstelle der Mantelflächen benachbarter Rohrabschnitte miteinander verbunden. Hierdurch ist es möglich, die Rohrabschnitte in einfachster Weise und lagegenau zu verbinden und das Material der Rohrabschnitte selbst zur Herstellung der Verbindung zu verwenden.

Erfindungsgemäß sind die Rohrabschnitte an gegenüberliegenden Endbereichen mit jeweils einer Verbindungsstelle zu verbinden, da die Endbereiche zur Herstellung der Verbindung gut zugänglich sind.

In besonderer Ausgestaltung der Erfindung sind die Verbindungsstellen bei als Netzrohre ausgebildeten Rohrabschnitten an den Strängen der Netzrohre und vorzugsweise an den Kreuzungsstellen von Umfangssträngen und Längssträngen vorgesehen, da die dortige Materialanhäufung die Ausbildung der Verbindungsstellen begünstigt.

Mitunter, insbesondere zur Ausbildung besonders strukturierter Füllkörperblöcke, ist es zweckmäßig, daß sich von der Mantelfläche der Rohrabschnitte in Richtung jedes benachbarten Rohrabschnitts mindestens ein Verbindungssteg im wesentlichen radial erstreckt und die Verbindungsstellen an korrespondierenden Verbindungsstegen benachbarter Rohrabschnitte angeordnet sind.

Im Sinne der Erfindung ist es, daß die Verbindungsstellen durch Schweißen, insbesondere Preßschweißen, in Form einer Punkt- und/oder Linienschweißung ausgebildet sind, wodurch eine sichere Verbindung mit geringem Aufwand und ohne Zusatzmaterial herstellbar ist.

Weitere Merkmale der Erfindung und deren Vorteile ergeben sich aus den übrigen Unteransprüchen und der Beschreibung.

Bevorzugte Ausführungsbeispiele der Erfindung werden nachfolgend anhand der Zeichnung näher erläutert. In der Zeichnung zeigen:
- Fig. 1: einen Füllkörperblock in perspektivischer und schematischer Darstellung,
- Fig. 2: die Ansicht zweier verbundener Rohrabschnitte des Füllkörperblocks nach Fig. 1 von der Seite,
- Fig. 3: die Ansicht des Füllkörperblocks nach Fig. 2 auf die Stirnseite der miteinander verbundenen Rohrabschnitte,
- Fig. 4: ein zweites Ausführungsbeispiel eines Füllkörperblocks in einer Ansicht analog zu Fig. 3,
- Fig. 5: ein drittes Ausführungsbeispiel eines Füllkörperblocks in einer Ansicht analog zu Fig. 3 und
- Fig. 6: eine Ansicht eines vierten Ausführungsbeispiels eines Füllkörperblocks auf die Stirnseite der miteinander verbundenen Rohrabschnitte.

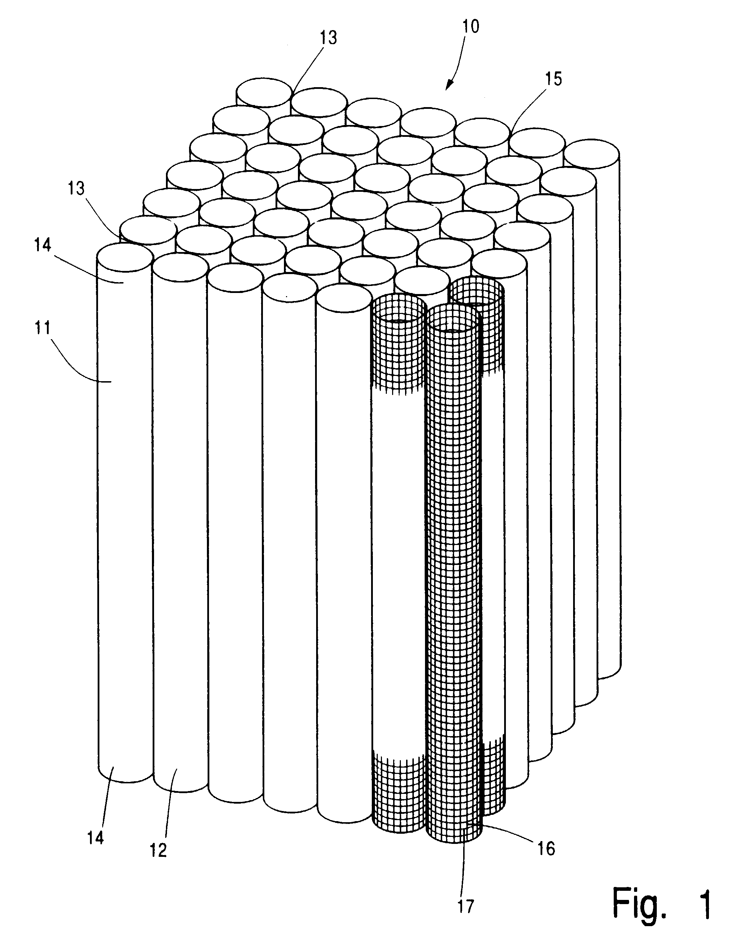

Ein Füllkörperblock 10, wie er in Fig. 1 dargestellt ist, dient der biologischen Behandlung von Fluiden und zwar von Abwässern. Ein oder auch mehrere mit biologischem Rasen besiedelte Füllkörperblöcke 10 werden dazu als sogenannter Tropfkörper feststehend in einem Flüssigkeitsbecken angeordnet, wobei das Abwasser zur biologischen Behandlung durch das Flüssigkeitsbecken und den Füllkörperblock 10 hindurchgeleitet wird. Die Füllkörperblöcke 10 können zum anderen aber auch als sog. Tauchtropfkörper in einem Tauchtrommelreaktor angeordnet sein, wobei durch einen drehenden Antrieb des Trommelreaktors das sich in einem Flüssigkeitsbecken befindliche Abwasser durch die Füllkörperblöcke 10 hindurchströmt.

Die Füllkörperblöcke 10 sind aus Rohrabschnitten 11 zusammengesetzt, die eine netzartig strukturierte Mantelfläche 12 aufweisen. Bei den hier gezeigten Ausführungsbeispielen sind die Rohrabschnitte 11 als Netzrohre ausgebildet. Die Netzrohre sind durch aus in Axialrichtung der Netzrohre verlaufende Längsstränge 16 und in Umfangsrichtung der Netzrohre verlaufende Umfangsstränge 17 gebildet.

Der Füllkörperblock 10 wird erfindungsgemäß dadurch gebildet, daß die nebeneinander liegenden Rohrabschnitte 11 entsprechend den gewünschten Abmessungen des Füllkörperblocks 10 nur mantelseitig miteinander verbunden werden. Die benachbarten Rohrabschnitte 11 werden an zwei Verbindungsstellen 13 miteinander verbunden, wobei die Verbindungsstellen 13 sich dort befinden, wo die Mantelflächen 12 der zu verbindenden Rohrabschnitte 11 sich berühren.

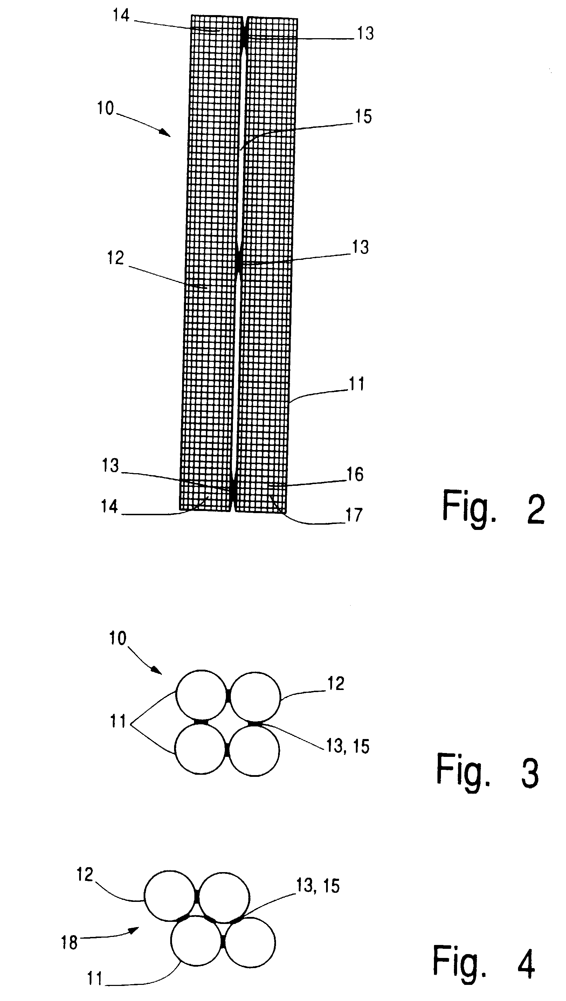

An jedem der beiden gegenüberliegenden Endbereiche 14 der Rohrabschnitte 11 befindet sich eine der Verbindungsstellen 13. Diese können in einem geringen Abstand von den Stirnseiten angeordnet (Fig. 2), müssen aber bis an die Stirnseite der Rohrabschnitte 11 heranreichen. Wie in Fig. 2 dargestellt, befindet sich eine weitere Verbindungsstelle 13 zwischen den Verbindungsstellen 13 an den gegenüberliegenden Endbereichen 14.

Es liegen jeweils zwei benachbarte Rohrabschnitte 11 auf einer sich etwa über die gesamte Länge derselben erstreckende Berührungslinie 15 zusammen. Auf der Berührungslinie 15 liegen alle Verbindungsstellen 13 jeweils zweier Rohrabschnitte 11.

Die Verbindungsstellen 13 werden durch Schweißen, beispielsweise durch Preßschweißen, hergestellt. Zum Punktschweißen werden die Rohrabschnitte 11 so zueinander positionieren, daß sie sich an Kreuzungsstellen von Längssträngen 16 und Umfangssträngen 17 der Netzrohre berühren, da die dortige Materialanhäufung der Netzrohre die Ausbildung der Punktschweißung begünstigt.

Zwei der Rohrabschnitte 11 werden durch Linienschweißung miteinander verbunden, indem sie zuerst so zueinander positioniert sind, daß jeweils ein Längsstrang 16 des einen Rohrabschnitts 11 an einem Längsstrang 16 des anderen Rohrabschnitts 11 entlang der derart gebildeten gemeinsamen Berührungslinie 15 anliegt. Sodann werden die Längsstränge 16 zwischen den Kreuzungsstellen der Längsstränge 16 und Umfangsstränge 17 durch die Verbindungsstellen 13 verbunden, wobei letztere als Linienschweißstellen ausgebildet sind. Alle Verbindungsstellen 13 sind somit der Berührungslinie 15 zugeordnet.

Das Punkt- und Linienschweißen erfolgt durch Preßschweißen, indem aus dem freien Innenraum der benachbarten Rohrabschnitte 11 je ein Heiz- und Preßorgan der Schweißeinrichtung zangenartig gegen die Rohrabschnitte 11, dort, wo sie entlang der Berührungslinie 15 aneinanderliegen, bewegt werden. Infolge der Einwirkung von Wärme und Druck schmilzt das Material an den vorgesehenen Verbindungsstellen 13 und fließt ineinander, so daß die Punkt- oder Linienschweißung gebildet wird.

Bei dem Füllkörperblock 10 (Fig. 1 bis 3) sind die Rohrabschnitte 11 reihen- und zeilenweise zueinander ausgerichtet, wobei der Reihen- und Zeilenabstand etwa dem Durchmesser der Rohrabschnitte 11 entspricht.

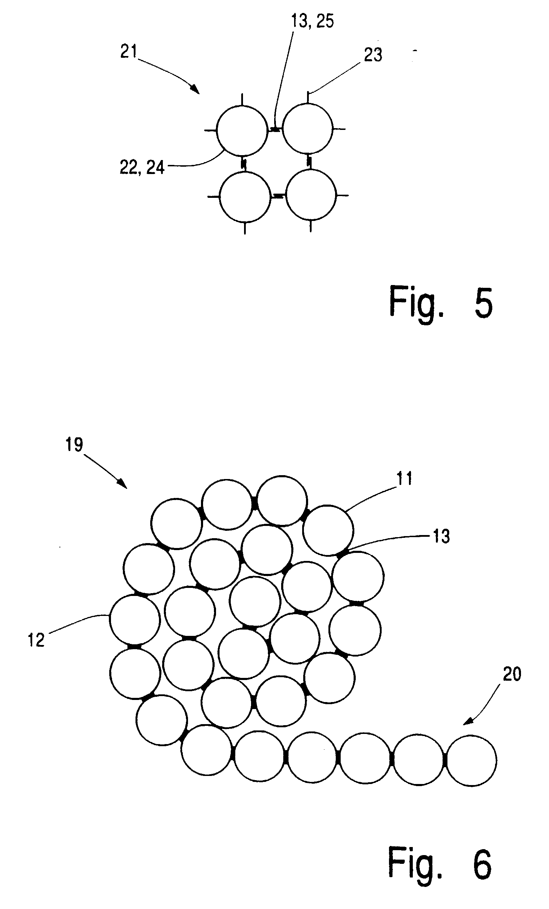

Auch bei einem Füllkörperblock 18 (Fig. 4) sind die Rohrabschnitte 11 reihen- und zeilenweise angeordnet, jedoch "auf Lücke" versetzt. Durch diesen Vorsatz ist der Reihen- und Zeilenabstand kleiner als der Durchmesser der Rohrabschnitte 11 (Fig. 3). Außerdem sind bei dieser Art der Relativanordnung der Rohrabschnitte 11 zueinander fünf verschiedene Berührungslinien 15 der Mantelflächen 13 bei vier benachbarten Rohrabschnitten 12 gegeben. Dadurch erhält der Füllkörperblock 18 eine besonders hohe Eigenstabilität.

Ein weiterer Füllkörperblock 19 ist in Fig. 6 dargestellt. Dieser wird gebildet, indem die nebeneinanderliegenden Rohrabschnitte 11 quasi zu einem Band 20 verbunden werden und dieses Band 20 sodann zu dem etwa runden Füllkörperblock 19 spiralförmig aufgewickelt wird. Dabei wird der Füllkörperblock 19 fertiggestellt, indem der letzte Rohrabschnitt 11 des Bandes 20 auch mit dem zuvor bereits aufgewickelten Rohrabschnitt 11 mantelseitig verbunden wird, an dem der letzte Rohrabschnitt 12 nach dem vollständigen Aufwickeln des Bandes 20 zur Anlage kommt. Zusätzlich können zur Erhöhung der Eigenstabilität des Füllkörperblocks 19 die erst durch das Aufwickeln aneinanderliegenden Rohrabschnitte 11 mit weiteren Verbindungsstellen 13 versehen werden.

Ein in der Fig. 5 teilweise dargestellter Füllkörperblock 21 nach einem anderen Ausführungsbeispiel der Erfindung verfügt über Rohrabschnitte 22 die Verbindungsstege 23 aufweisen. Dabei erstreckt sich der Verbindungssteg 23 von einer Mantelfläche 24 des Rohrabschnitts 22 in Richtung jedes benachbarten Rohrabschnitts 22 im wesentlich radial nach außen. Die Verbindungsstege 23 sind um etwa 90° versetzt am Außenumfang der Rohrabschnitte angeordnet. Der jeweilige Verbindungssteg 23 bildet mit dem korrespondierenden Verbindungssteg 23 des benachbarten Rohrabschnitts 22 mindestens an einem Teilbereich eine gemeinsame Berührungsstelle oder auch eine Berührungslinie 25, der die Verbindungsstelle 13 bzw. Verbindungsstellen 13 zugeordnet sind. Der Verbindungssteg 23 ist vorzugsweise direkt an dem zugehörigen Längsstrang 16 des Rohrabschnitts 22 angeordnet.

Die Rohrabschnitte 22 werden zum Zusammenfügen des Füllkörperblocks 21 entsprechend zueinander gedreht, wobei die Verbindungsstellen 13 in Form von Punkt- oder Linienschweißung der korrespondierenden Verbindungsstege 23 ausgebildet werden. Die Punkt- und/oder Linienschweißung erfolgt analog der zuvor beschriebenen Weise, wobei die Heiz- und Preßorgane der Schweißeinrichtung von beiden Seiten zweier jeweils aneinanderliegender Verbindungsstege 23 aufeinanderzubewegt werden und auf der Berührungslinie 25 die Verbindungslinie 15 ausbilden.

Die Verbindungsstege 23 können sich etwa entlang der gesamten Länge der Rohrabschnitte 22 erstrecken. Sie können aber auch einen unterbrochenen Verlauf aufweisen, derart, daß sie mindestens zwei zueinander beabstandete Teilbereiche aufweisen, denen jeweils mindestens eine der Verbindungsstellen 13 zugeordnet ist. Die Ausbildung der Verbindungsstege 23 sowie die Anzahl und Art der Verbindungsstellen 13 hängen von den jeweiligen Einsatzbedingungen des Füllkörperblocks 21 ab.

## Patentansprüche

1. Füllkörperblock zur Bildung von Tropfkörpern oder Tauchtropfkörpern für die biologische Behandlung von insbesondere Abwässern, mit einer Mehrzahl miteinander verbundener Rohrabschnitte (11, 22), die vorzugsweise eine netzartig strukturierte Mantelfläche (Netzrohre) aufweisen, wobei die Rohrabschnitte (11, 22) mantelseitig miteinander verbunden sind durch Verbindungsstellen (13) an gegenüberliegenden Endbereichen der Rohrabschnitte (11, 22) und mindestens eine weitere Verbindungsstelle (13) zwischen den endseitigen Verbindungsstellen (13), die auf einer gemeinsamen Berührungslinie (15, 25) zwischen jeweils zwei benachbarten Rohrabschnitten (11, 22) angeordnet sind.

2. Füllkörperblock nach Anspruch 1, dadurch gekennzeichnet, daß die Verbindungsstellen (13) nur im Bereich der Berührungslinien (15, 25) der Mantelflächen (12) benachbarter Rohrabschnitte (11) miteinander verbunden sind.

3. Füllkörperblock nach einem der vorhergehenden Ansprüche, dadurch gekennzeichnet, daß die Rohrabschnitte (11) reihen- und zeilenweise angeordnet und verbunden sind, derart, daß der Zeilen- und Reihenabstand etwa dem Durchmesser des Rohrabschnitts (11) entspricht.

4. Füllkörperblock nach einem der vorhergehenden Ansprüche, dadurch gekennzeichnet, daß die Rohrabschnitte (11) zueinander versetzt reihen- und zeilenweise angeordnet und verbunden sind, derart, daß der Zeilen- und Reihenabstand kleiner als der Durchmesser des Rohrabschnitts (11) ist.

5. Füllkörperblock nach einem der vorhergehenden Ansprüche, dadurch gekennzeichnet, daß die Verbindungsstellen (13) durch Schweißen, insbesondere durch Preßschweißen und/oder Punktschweißen, vorzugsweise in Form einer Punkt- und/oder Linienschweißung gebildet sind.

6. Füllkörperblock nach einem der vorhergehenden Ansprüche, dadurch gekennzeichnet, daß die parallelen Rohrabschnitte (11) zu einem Band (20) verbunden sind und dieses spiralförmig zu einem Füllkörperblock (19) aufgewickelt ist.

7. Füllkörperblock nach einem der vorhergehenden Ansprüche, dadurch gekennzeichnet, daß die Verbindungsstellen (13) bei als Netzrohre ausgebildeten Rohrabschnitten (11) an Strängen der Netzrohre vorzugsweise an Kreuzungsstellen von Umfangssträngen (17) und Längssträngen (16) vorgesehen sind.

8. Füllkörperblock nach einem der vorhergehenden Ansprüche, dadurch gekennzeichnet, daß sich von einer Mantelfläche (24) der Rohrabschnitte (22) in Richtung jedes benachbarten Rohrabschnitts (22) mindestens ein Verbindungssteg (23) im wesentlichen radial erstreckt und die Verbindungsstellen (13) an korrespondierenden Verbindungsstegen (23) benachbarter Rohrabschnitte (22) angeordnet sind.

9. Füllkörperblock nach Anspruch 8, dadurch gekennzeichnet, daß sich der Verbindungssteg (23) etwa über die Länge der Rohrabschnitte (22) erstreckt und die Verbindungsstellen (13) vorzugsweise nur Teilbereichen des Verbindungsstegs (23) zugeordnet sind.

10. Füllkörperblock nach einem der vorhergehenden Ansprüche, dadurch gekennzeichnet, daß die Verbindungsstege (23) einen unterbrochenen Verlauf mit mindestens zwei zueinander beabstandeten Teilbereichen aufweisen, denen je eine Verbindungsstelle (13) zugeordnet ist.

## Claims

1. Contact-filter block for the construction of trickling filters or rotating disc filters for the biological treatment of, in particular, waste waters, comprising a plurality of tube sections (11, 22) which are joined together and have an outside surface preferably structured in a net-like manner (net-type tubes), the outside surfaces of the tube sections (11, 22) being joined together by joints (13) at oppositely situated end regions of the tube sections (11, 22), and by at least one further joint (13) between the end joints (13) which are disposed on a common contact line (15, 25) between in each case two adjacent tube sections (11, 22).

2. Contact-filter block according to Claim 1, characterized in that the joints (13) are joined together only in the region of the contact lines (15, 25) of the outside surfaces (12) of adjacent tube sections (11).

3. Contact-filter block according to one of the preceding claims, characterized in that the tube sections (11) are disposed and joined in rows and lines in such a way that the line and row spacing corresponds approximately to the diameter of the tube section (11).

4. Contact-filter block according to one of the preceding claims, characterized in that the tube sections (11) are disposed and joined in rows and lines so as to be offset with respect to one another in such a way that the line and row spacing is less than the diameter of the tube section (11).

5. Contact-filter block according to one of the preceding claims, characterized in that the joints (13) are formed by welding, in particular by pressure welding and/or spot welding, preferably in the form of a spot and/or linear weld.

6. Contact-filter block according to one of the preceding claims, characterized in that the parallel tube sections (11) are joined to form a strip (20) and the latter is rolled up spirally to form a contact-filter block (19).

7. Contact-filter block according to one of the preceding claims, characterized in that, in the case of tube sections (11) constructed as net-type tubes, the joints (13) are provided at strands of the net-type tubes, preferably at crossovers of circumferential strands (17) and longitudinal strands (16).

8. Contact-filter block according to one of the preceding claims, characterized in that at least one joining web (23) extends essentially radially from an outside surface (24) of the tube sections (22) in the direction of each adjacent tube section (22) and the joints (13) are disposed at corresponding joining webs (23) of adjacent tube sections (22).

9. Contact-filter block according to Claim 8, characterized in that the joining web (23) extends approximately over the length of the tube sections (22) and the joints (13) are preferably associated only with subregions of the joining web (23).

10. Contact-filter block according to one of the preceding claims, characterized in that the joining webs (23) have an interrupted pattern having at least two subregions which are spaced apart and with which one joint (13) is associated in each case.

## Revendications

1. Bloc de remplissage pour la formation de lits percolateurs ou de lits percolateurs immergés pour le traitement biologique d'eaux usées notamment, comprenant une pluralité de sections de tuyau (11, 22) reliées les unes aux autres, qui présentent de préférence une surface d'enveloppe structurée comme un treillis (tuyau réticulé), dans lequel les sections de tuyau (11, 22) sont reliées les unes aux autres au niveau de l'enveloppe par des points de jonction (13) dans les régions terminales opposées des sections de tuyau (11, 22) et au moins un autre point de jonction entre les points de jonctions (13) du côté des extrémités, qui sont disposés sur une ligne de contact (15, 25) commune chaque fois entre deux sections de tuyau (11, 22) voisines.

2. Bloc de remplissage selon la revendication 1, caractérisé en ce que les points de jonction (13) ne sont reliés l'un avec l'autre que dans la région de la ligne de contact (15, 25) de la surface d'enveloppe (12) de sections de tuyau (11) voisines.

3. Bloc de remplissage selon une des revendications précédentes, caractérisé en ce que les sections de tuyau (11) sont disposées par rangées et par lignes et sont reliées de manière telle que l'écart entre les lignes et les rangées correspond sensiblement au diamètre de la section de tuyau (11).

4. Bloc de remplissage selon une des revendications précédentes, caractérisé en ce que les sections de tuyau (11) sont disposées par rangées et par ligne de manière décalée les unes par rapport aux autres et sont reliées de manière telle que l'écart entre les lignes et les rangées est plus petit que le diamètre de la section de tuyau (11).

5. Bloc de remplissage selon une des revendications précédentes, caractérisé en ce que les points de jonction (13) sont réalisés par soudage, en particulier par soudage sous pression et/ou soudage par points, de préférence sous la forme d'un soudage par points et / ou en ligne.

6. Bloc de remplissage selon une des revendications précédentes, caractérisé en ce que les sections de tuyau (11) parallèles sont reliées en une bande (20) et celle-ci est enroulée en forme de spirale pour constituer un bloc de remplissage (19).

7. Bloc de remplissage selon une des revendications précédentes, caractérisé en ce que les points de jonction (13) sont prévus, pour des sections de tuyau conformées comme des tuyaux réticulés, sur des fils des tuyaux réticulés, de préférence en des points de croisement de fils périphériques (17) et de fils longitudinaux (16).

8. Bloc de remplissage selon une des revendications précédentes, caractérisé en ce qu'au moins une languette de connexion (23) s'étend de manière essentiellement radiale d'une surface d'enveloppe (24) des sections de tuyau (22) en direction de chaque section de tuyau (22) voisine et les points de jonction (13) sont disposés sur des languettes de connexion (23) correspondantes de sections de tuyau (22) voisines.

9. Bloc de remplissage selon la revendication 8, caractérisé en ce que la languette de connexion (23) s'étend sensiblement sur la longueur des sections de tuyau (22) et les points de jonction (13) ne sont de préférence coordonnés qu'avec des zones partielles de la languette de connexion (23).

10. Bloc de remplissage selon une des revendications précédentes, caractérisé en ce que les languettes de connexion (23) présentent un parcours interrompu avec au moins deux zones partielles écartées l'une de l'autre, avec lesquelles un point de jonction est chaque fois coordonné.
